Europäisches Patentamt

European Patent Office

Office européen des brevets

(11) Numéro de publication: **0 401 088**
**A1**

## (12) DEMANDE DE BREVET EUROPEEN

(21) Numéro de dépôt: **90401373.7**

(22) Date de dépôt: **22.05.90**

(51) Int. Cl.5: **B62B 7/10**

(30) Priorité: **02.06.89 FR 8907335**

(43) Date de publication de la demande:
**05.12.90 Bulletin 90/49**

(84) Etats contractants désignés:
**AT BE CH DE DK ES FR GB GR IT LI LU NL SE**

(71) Demandeur: **AMPAFRANCE S.A.**
**119, Rue de Paris**
**F-92107 Boulogne-Billancourt Cedex(FR)**

(72) Inventeur: **Bigo, Jean**
**74, rue Maindron**
**F-49300 Cholet(FR)**

(74) Mandataire: **Casalonga, Axel et al**
**BUREAU D.A. CASALONGA - JOSSE**
**Morassistrasse 8**
**D-8000 München 5(DE)**

(54) **Poussette pliante pour enfant.**

(57) Poussette pliante pour enfant comprenant deux ensembles latéraux de châssis reliés entre eux par au moins un organe d'entretoisement transversal et déformable pour le repliage et le déploiement de la poussette, chaque ensemble latéral de châssis comprenant un poussoir (1) solidaire d'un guidon (2), un piètement avant (3) et un piètement arrière (8), le poussoir (1) pouvant coulisser parallèlement au piètement avant (3) par l'intermédiaire d'un coulisseau (11) solidaire de l'extrémité supérieure du piètement avant, caractérisée par le fait que deux manchons (13) traversés chacun librement par le poussoir (1) et le piètement avant (3) sont chacun solidaires d'une pièce de support (15) s'étendant vers le bas et comportant un palier pour un axe d'articulation (16) du piètement arrière (8), le piètement arrière (8) comportant une prolongation (18) au-delà dudit axe d'articulation (16) et qu'une bielle de liaison (19) est articulée entre l'extrémité de la prolongation (18) du piètement arrière (8) et un point voisin de l'extrémité inférieure du poussoir (1).

FIG.1

# POUSSETTE PLIANTE POUR ENFANT

L'invention a pour objet une poussette pliante pour enfant, du type comprenant deux ensembles latéraux de châssis reliés entre eux par au moins un organe d'entretoisement transversal, les deux ensembles latéraux de châssis étant déformables pour permettre le repliage et le déploiement de la poussette.

On connaît déjà des poussettes de ce type, dont la commande de pliage se fait par une action de poussée sur une portion du châssis solidaire du guidon et pouvant constituer de ce fait un poussoir. Lors des mouvements de repliage et de déploiement de la poussette, le poussoir peut alors coulisser parallèlement au piètement avant de la poussette par l'intermédiaire d'un coulisseau fixé au voisinage de l'extrémité supérieure dudit piètement avant. La liaison entre les différents éléments constituant chaque ensemble latéral de châssis afin d'assurer le repliage et le reploiement de l'ensemble de la poussette, est habituellement constituée par une bielle de liaison articulée entre l'extrémité basse du poussoir coulissant et une zone médiane ou inférieure du piètement arrière de la poussette. De cette manière, une action de poussée sur le guidon ou le poussoir, après libération d'éventuels organes de blocage ou de verrouillage, provoque le pivotement du piètement arrière autour d'un axe d'articulation qui peut, par exemple, être solidaire du coulisseau précédemment mentionné, les deux ensembles latéraux de châssis se trouvant après repliage dans une position compacte, toutes les roues de la poussette ayant été rapprochées les unes des autres. Dans une variante, il est également possible d'inverser les positions des axes d'articulation respectifs de la bielle de liaison et du piètement arrière, de façon à obtenir, qu'en position repliée de la poussette, les roues de la poussette soient au contraire éloignées les unes des autres, mais dans le plan général de l'ensemble du châssis replié.

On pourra se référer, à titre d'exemple, d'une telle poussette pliante, à la demande de brevet français 84 09 814 (AMPAFRANCE).

La présente invention a pour objet la réalisation d'une poussette pliante pour enfant qui permet d'augmenter la rigidité structurelle de la poussette, en particulier en ce qui concerne la liaison entre les roues et le châssis, tout en permettant un repliage compact et aisé des deux ensembles latéraux de châssis.

La présente invention a également pour objet une structure de châssis qui permet d'augmenter la compacité de la poussette repliée.

Enfin, l'invention a également pour objet de concevoir un arrangement de carter de protection enserrant en position déployée l'ensemble des éléments mobiles articulés permettant le repliage de la poussette.

La poussette pliante pour enfant, selon l'invention, comprend deux ensembles latéraux de châssis reliés entre eux par au moins un organe d'entretoisement transversal. Les deux ensembles latéraux de châssis sont déformables pour permettre le repliage et le déploiement de la poussette. Chaque ensemble latéral de châssis comprend un poussoir solidaire d'un guidon transversal, un piètement avant et un piètement arrière. Le poussoir peut coulisser parallèlement au piètement avant par l'intermédiaire d'un coulisseau solidaire de l'extrémité supérieure du piètement avant. Selon l'invention, la poussette comprend, en outre, deux manchons traversés chacun librement par le poussoir et le piètement avant et chacun solidaire d'une pièce de support s'étendant vers le bas et comportant un palier pour un axe d'articulation du piètement arrière. Le piètement arrière comprend une prolongation s'étendant au-delà de l'axe d'articulation précité. Une bielle de liaison est articulée entre l'extrémité de la prolongation du piètement arrière et un point du poussoir voisin de son extrémité inférieure.

Grâce à une telle disposition, le repliage de la poussette se fait, après déblocage d'un organe de verrouillage éventuel, par une simple action de poussée directement sur le poussoir ou par l'intermédiaire du guidon dont il est solidaire. Cette action entraîne le coulissement du poussoir parallèlement au piètement avant et, en même temps, une traction sur la bielle de liaison qui provoque un couple de rotation par rapport à l'axe d'articulation du piètement arrière, entraînant le pivotement de ce dernier autour de son axe d'articulation solidaire de la pièce de support. Dans ce mouvement, les deux manchons se déplacent en coulissant sur le poussoir et sur le piètement avant en étant entraînés dans leur mouvement par l'axe d'articulation du piètement arrière. Les roues de la poussette ne participent pas au mouvement et restent immobiles. Dans la position complètement repliée de la poussette, les deux ensembles latéraux de châssis se retrouvent complètement repliés sensiblement dans le plan des essieux des roues de la poussette. Le poussoir qui, dans la position déployée de la poussette, fait saillie vers le haut pour permettre de saisir le guidon de la poussette à une hauteur convenable, se retrouve, en position complètement repliée de la poussette, sensiblement entre les essieux respectifs des roues avant et arrière de la poussette.

On comprend que l'on obtienne de cette façon une position repliée extrêmement compacte de la poussette. De plus, étant donné que les roues ne participent pas au mouvement de repliage, contrairement à ce qui était le cas auparavant et notamment dans la poussette connue mentionnée précédemment, il est possible de renforcer sans difficulté la partie inférieure du châssis de la poussette en augmentant ainsi la rigidité de l'ensemble.

L'orientation et la longueur de la prolongation du piètement arrière au-dessus de son axe d'articulation sur la pièce de support sont de préférence telles qu'en position repliée de la poussette, le point d'articulation de la bielle de liaison sur le poussoir soit proche d'une position alignée avec le point d'articulation de la bielle de liaison sur ladite prolongation du piètement arrière et avec le point de pivotement inférieur du piètement arrière. De cette manière, on obtient un encombrement minimal de la poussette en position repliée.

A cet effet, on peut envisager, dans un mode de réalisation avantageux, de réaliser la prolongation du piètement arrière sous une forme coudée vers l'arrière, de façon à allonger encore la bielle de liaison.

Dans d'autres modes de réalisation, on préférera cependant tolérer qu'en position complètement repliée de la poussette, le poussoir se trouve légèrement en saillie, les trois points précédents n'étant alors pas exactement alignés dans la position complètement repliée de la poussette.

La pièce de support fait de préférence partie d'un carter de protection qui renferme le manchon et masque complètement la bielle de liaison et la prolongation du piètement arrière, en position déployée de la poussette. Avec une telle structure, l'ensemble des éléments d'articulation et de liaison de chaque ensemble latéral de châssis se trouve totalement dissimulé à l'intérieur du carter de protection.

Chaque carter de protection peut en outre avantageusement recevoir un moyen de support et de réglage en position pour une nacelle de réception de l'enfant, montée entre les deux ensembles latéraux de châssis. Le carter de protection peut alors également comporter des organes de blocage en position ou de freinage pouvant agir sur l'orientation de la nacelle de réception de l'enfant et également sur le coulissement du poussoir et du piètement avant à l'intérieur du manchon.

Dans un premier mode de réalisation, les extrémités inférieures des piètements arrière peuvent être articulées directement autour d'un essieu arrière transversal portant également deux roues arrière pour la poussette.

Les extrémités inférieures des piètements avant peuvent être articulées autour d'un essieu avant transversal portant également deux roues avant pour la poussette.

Dans un autre mode de réalisation, les extrémités inférieures de chaque piètement avant peuvent recevoir un bloc-roue indépendant pouvant pivoter autour d'un axe vertical pour assurer les changements de direction de la poussette. Chaque bloc-roue peut comporter une ou deux roues. Les blocs-roues peuvent en outre être bloqués en position fixe commme cela est bien connu.

Dans un autre mode de réalisation, la poussette peut également comprendre une base inférieure sensiblement horizontale articulée sur les extrémités inférieures des piètements arrière et des piètement avant. Cette base rigide peut être constituée par exemple par un cadre tubulaire qui assure une grande rigidité de la portion inférieure de la poussette. Cette base peut, par exemple, supporter un panier de transport de paquets ou autres objets. La présence de cette base inférieure, éventuellement munie de son panier de transport, ne gêne nullement le repliage et le déploiement de la poussette puisque la partie inférieure et notamment les essieux des roues ne participent pas au mouvement de repliage et de déploiement.

L'invention sera mieux comprise à l'étude de la description détaillée faite à titre d'exemple nullement limitatif d'un mode de réalisation de l'invention illustré par les dessins annexés, sur lesquels :

la figure 1 représente schématiquement une poussette pliante selon l'invention, en vue de côté et en position complètement déployée;

la figure 2 est une vue de la même poussette simplifiée, représentée en cours de pliage dans une position qui correspond à l'encombrement longitudinal minimum des éléments de châssis; et

la figure 3 est une vue de la même poussette en position complètement repliée.

En se référant aux figures annexées, la poussette pliante selon l'invention comprend, de chaque côté de son châssis, un poussoir 1 solidaire d'un guidon transversal 2 qui pourrait éventuellement être remplacé par deux poignées indépendantes. Un piètement avant 3 est disposé parallèlement au poussoir 1 et porte à son extrémité repliée verticalement 4 un essieu individuel 5 pour un bloc-roue 6 à double roulettes monté par l'intermédiaire d'une suspension 7 comportant en outre des moyens de blocage en direction non représentés sur la figure.

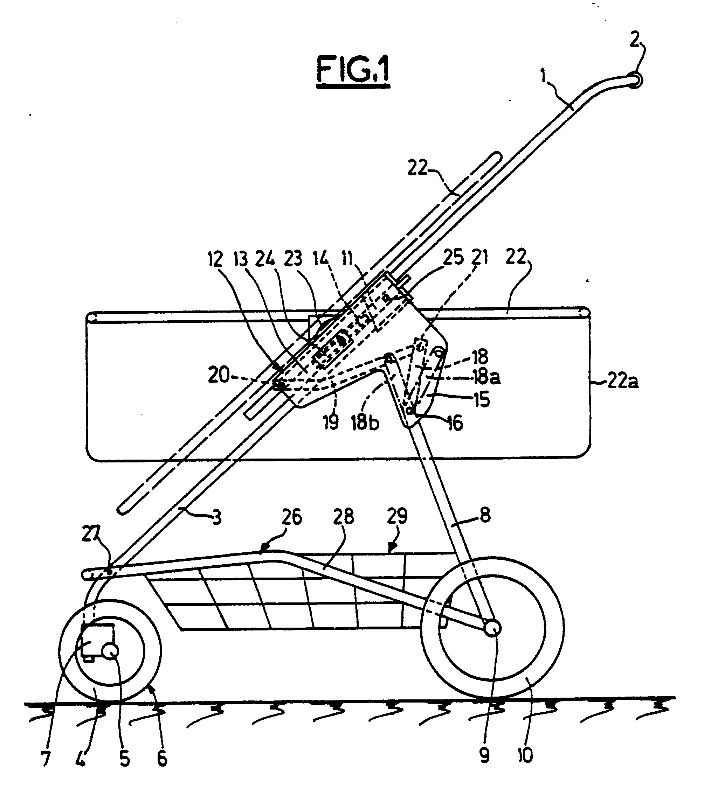

Le piètement arrière 8 porte à son extrémité inférieure un essieu transversal 9 commun à deux roues arrière 10 dont une seule est visible sur la figure 1. On comprendra bien entendu que dans un autre mode de réalisation, l'essieu transversal unique 9 pourrait être remplacé par deux essieux indépendants portant chacun une des roues arrière 10.

Etant donné que la poussette est représentée sur la figure 1 en vue de côté, on comprendra que le châssis complet de la poussette soit en réalité constitué par deux ensembles latéraux identiques, comportant chacun un poussoir 1, un piètement avant 3, un piètement arrière 8 ainsi que les différents organes de liaison de ces éléments entre eux que l'on va maintenant détailler.

Un coulisseau 11 bien visible sur la figure 2 est fixé de manière solidaire à l'extrémité supérieure du piètement avant 3. Le coulisseau 11 peut être constitué par une pièce en matière plastique fixée à l'extrémité du piètement avant 3 et comportant un passage pour le libre coulissement du poussoir 1. A ce titre, lors des mouvements de repliage et de déploiement de la poussette, le coulisseau 11 participe au guidage du coulissement du poussoir 1 par rapport au piètement avant 3.

Un carter de protection référencé 12 dans son ensemble comprend un manchon de guidage 13 à l'intérieur duquel peuvent coulisser librement à la fois le poussoir 1 et le piètement avant 3. Pour obtenir un tel résultat, on peut prévoir une pièce massive comportant des passages appropriés pour le poussoir 1 et le piètement avant 3. On peut également prévoir comme illustré schématiquement sur la figure 1, une pièce creuse présentant un ou plusieurs paliers de glissement internes 14.

Le carter de protection 12 comprend également une prolongation vers le bas constituant une pièce de support 15 dont l'extrémité inférieure comporte un palier pour un axe d'articulation 16 du piètement arrière 8. Si l'ensemble du carter de protection 12 comprend deux parois écartées l'une de l'autre de façon à pouvoir enserrer les différents organes de châssis, tels que le poussoir 1, le piètement avant 3 et le piètement arrière 8, par exemple réalisés sous forme tubulaire, il suffira d'un perçage dans ces deux parois latérales pour permettre le passage et le soutien de l'axe d'articulation 16. Bien que la pièce de support 15 soit ici représentée comme faisant partie intégrante du carter 12, elle pourrait, en variante, être réalisée différemment, par exemple sous la forme d'une pièce indépendante fixée au manchon 13.

Le piètement arrière 8 comporte une prolongation 18 se trouvant au-delà et au-dessus de l'axe d'articulation 16 dans la position déployée de la poussette illustrée sur la figure 1. Dans l'exemple illustré sur la figure 1, la prolongation 18 est coudée vers l'arrière, en faisant un angle d'environ 30° avec la partie principale du piètement arrière 8. Une bielle de liaison 19 légèrement coudée comme on le voit sur la figure 1 est fixée par un premier axe d'articulation 20 au voisinage de l'extrémité inférieure du poussoir 1 et par un deuxième axe d'articulation 21 à l'extrémité supérieure de la prolongation 18. La bielle 19 comme la prolongation 18 se trouvent masquées à l'intérieur du carter de protection 12 dans la position complètement déployée de la poussette illustrée sur la figure 1.

On comprendra que la poussette comporte de chaque côté un carter de protection 12 et une bielle de liaison 19 qui viennent compléter l'ensemble latéral de châssis comprenant déjà le poussoir 1, le piètement avant 3 et le piètement arrière 8. Entre chacun de ces ensembles latéraux de châssis ainsi constitués, se trouve disposé un support 22 pour un hamac 22a ou une nacelle de réception d'un enfant. Le support 22 peut être constitué comme illustré sur la figure 1, par un cadre de forme générale rectangulaire. Le support 22 est fixé latéralement par deux noix de réglage 23 montées sur la paroi interne de chacun des carters de protection 12, de façon à permettre un mouvement de pivotement du support 22 entre la position illustrée en traits pleins sur la figure 1 ou position couchée et la position illustrée en traits mixtes ou position assise.

Le blocage en position du support 22 est assuré par deux organes de blocage dont l'un référencé 24 est visible sur la figure 1. Pour assurer l'orientation et le pivotement du support 22, il suffit alors de débloquer les organes de blocage 24, ce qui peut avantageusement avoir simultanément pour effet de libérer le coulissement du manchon 13 par rapport au poussoir 1 et au piètement avant 3. Le verrouillage en position complètement déployée de la poussette est assuré par un organe de verrouillage 25 solidaire du coulisseau 11 et coopérant avec le carter de protection 12.

La poussette se complète dans l'exemple illustré sur la figure 1 par une base inférieure 26 affectant la forme d'un cadre sensiblement rectangulaire et horizontal dont le côté arrière constitue l'essieu arrière 9 transversal. Les piètements avant 3 sont articulés par un axe 27 au voisinage des extrémités avant des montants latéraux 28 qui, dans l'exemple illustré, sont légèrement coudés afin de faciliter le montage à l'intérieur du cadre 26 d'un panier de transport 29. Il y a lieu de noter que l'existence de la base inférieure 26 n'est pas indispensable bien qu'elle améliore la rigidité du châssis de la poussette dans son ensemble.

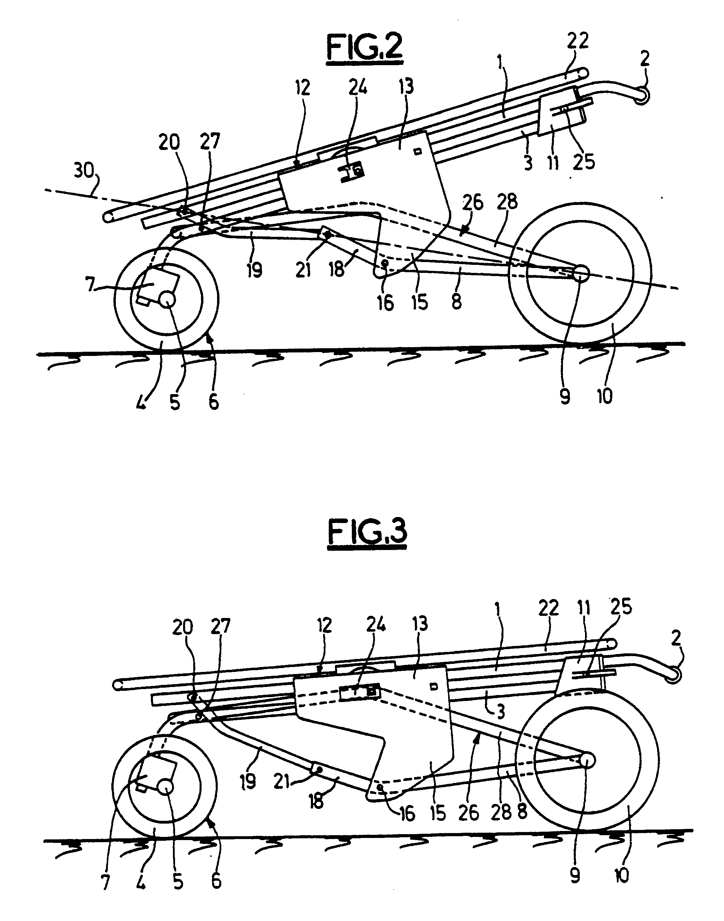

On va maintenant expliquer en s'aidant des figures 1 à 3, l'opération de repliage de la poussette à partir de la position complètement dépliée illustrée sur la figure 1 et jusqu'à la position complètement repliée illustrée sur la figure 3. Pour simplifier les figures, on n'a pas représenté sur les figures 2 et 3 la nacelle 22a ni le panier 29.

Pour replier la poussette à partir de la position illustrée sur la figure 1, on ouvre tout d'abord les deux organes de blocage 24 se trouvant sur les deux carters de protection latéraux 12, ce qui permet de placer le support 22 parallèlement au poussoir 1 dans la position illustrée en traits mixtes sur la figure 1. Ce mouvement de déblocage qui libère le support 22 permet d'ailleurs d'obtenir automatiquement ce mouvement lors du repliage. On agit ensuite sur l'organe de verrouillage 25 de façon à libérer les carters de protection 12 des coulisseaux 11. Il suffit alors d'exercer une légère poussée sur le guidon 2 ou directement sur le poussoir 1 pour provoquer le repliage complet de la poussette. On notera que cet effort est extrêmement faible, les différents éléments de châssis se repliant pratiquement d'eux-mêmes.

Lors de ce mouvement de repliage, le poussoir 1 se déplace vers le bas en coulissant à l'intérieur du manchon 13 et en restant toujours parallèle au piètement avant 3. En raison de ce mouvement, la bielle de liaison 19, tirée vers le bas par son axe d'articulation 20, exerce un effort de traction sur la prolongation 18 par l'intermédiaire de son axe d'articulation 21, effort qui se transforme en couple de rotation autour de l'axe d'articulation 16 du piètement arrière 8. La manchon 13 du carter de protection 12 descend également vers le bas en coulissant le long du piètement avant 3 et en accompagnant dans ce mouvement vers le bas le pivotement du piètement arrière 8 autour de son essieu 9. Compte tenu de ce mouvement d'ensemble vers le bas, le piètement avant 3 pivote également vers le bas autour de son axe d'articulation 27 sur la base inférieure 26 et autour de son essieu 5.

La position illustrée sur la figure 2 montre la position de rentrée maximale du poussoir 1 dans son mouvement vers l'extrémité inférieure du piètement avant 3. Cette position correspond donc à l'encombrement longitudinal minimal des ensembles latéraux de châssis. Dans cette position, on a représenté l'alignement 30 entre l'axe d'articulation 20 de la bielle de liaison 19 sur le poussoir 1, l'axe d'articulation 21 de la bielle de liaison 19 sur la prolongation 18 et l'essieu arrière 9 qui constitue l'axe de pivotement inférieur du piètement arrière 8.

La position complètement repliée de la poussette illustrée sur la figure 3, correspond à un encombrement maximal en hauteur plus réduit. L'alignement 30 précédent n'est cependant plus tout à fait respecté, de sorte que le poussoir 1 est légèrement ressorti vers l'extérieur comme on peut le constater sur la figure. La structure des différents organes de liaison et en particulier la longueur de la bielle de liaison 19 et l'orientation de la prolongation 18 sont cependant de préférence choisies selon l'invention pour qu'en position complètement repliée de la poussette, les trois axes 20, 21 et 9 soient sensiblement alignés.

Pour obtenir ce résultat, on pourra modifier l'orientation de la prolongation 18 comme illustré en traits fins sur la figure 1 où l'on a représenté une prolongation 18a plus coudée vers l'arrière que la prolongation 18 qui entraîne donc une longueur plus importante de la bielle 19 et de ce fait une rentrée plus importante du poussoir 1 lors de la position repliée de la poussette. Au contraire, une prolongation 18b se trouve sensiblement dans l'axe du piètement arrière 8 et correspond donc à une bielle de liaison 19 de longueur inférieure.

## Revendications

1. Poussette pliante pour enfant comprenant deux ensembles latéraux de châssis reliés entre eux par au moins un organe d'entretoisement transversal et déformable pour le repliage et le déploiement de la poussette, chaque ensemble latéral de châssis comprenant un poussoir (1) solidaire d'un guidon (2), un piètement avant (3) et un piètement arrière (8), le poussoir (1) pouvant coulisser parallèlement au piètement avant (3) par l'intermédiaire d'un coulisseau (11) solidaire de l'extrémité supérieure du piètement avant, caractérisée par le fait que deux manchons (13) traversés chacun librement par le poussoir (1) et le piètement avant (3) sont chacun solidaires d'une pièce de support (15) s'étendant vers le bas et comportant un palier pour un axe d'articulation (16) du piètement arrière (8), le piètement arrière (8) comportant une prolongation (18) au-delà dudit axe d'articulation (16) et qu'une bielle de liaison (19) est articulée entre l'extrémité de la prolongation (18) du piètement arrière (8) et un point voisin de l'extrémité inférieure du poussoir (1).

2. Poussette pliante pour enfant selon la revendication 1, caractérisée par le fait que l'orientation et la longueur de la prolongation (18) du piètement arrière (8) sont telles qu'en position repliée de la poussette, le point d'articulation (20) de la bielle de liaison (19) sur le poussoir (1) soit proche d'une position alignée avec le point d'articulation (21) de la bielle de liaison (19) sur ladite prolongation (18) du piètement arrière (8) et avec le point de pivotement inférieur (9) du piètement arrière (8).

3. Poussette pliante selon les revendications 1 ou 2, caractérisée par le fait que la prolongation (18) est coudée vers l'arrière de façon à allonger la bielle de liaison (19).

4. Poussette pliante selon l'une quelconque des revendications précédentes, caractérisée par le fait que la pièce de support (15) fait partie d'un carter de protection (12) renfermant ledit manchon (13) et masquant la bielle de liaison (19) et la prolongation (18) du piètement arrière (8) en position déployée de la poussette.

5. Poussette pliante selon la revendication 3, caractérisée par le fait que chaque carter de protection (12) reçoit en outre un moyen (23) de support et de réglage en position pour une nacelle de réception de l'enfant montée entre les deux ensembles latéraux de châssis.

6. Poussette pliante selon l'une quelconque des revendications précédentes, caractérisée par le fait que les extrémités inférieures des piètements arrière (8) sont articulées autour d'un essieu arrière transversal (9) portant également deux roues arrière (10).

7. Poussette pliante selon l'une quelconque des revendications précédentes, caractérisée par le fait que les extrémités inférieures des piètements avant (3) sont articulées autour d'un essieu avant transversal portant également deux roues avant.

8. Poussette pliante selon l'une quelconque des revendications 1 à 6, caractérisée par le fait que l'extrémité inférieure de chaque piètement avant (3) reçoit un bloc-roue indépendant (6).

9. Poussette pliante selon l'une quelconque des revendications précédentes, caractérisée par le fait qu'elle comprend en outre une base inférieure sensiblement horizontale articulée sur les extrémités inférieures des piètements arrière (8) et sur les extrémités inférieures des piètements avant (3).

10. Poussette pliante selon la revendication 9, caractérisée par le fait que la base inférieure (26) porte un panier de transport (29).

# FIG.1

## FIG.2

## FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2607770 (AMPAFRANCE) <br> * page 5, ligne 31 - page 6, ligne 19; figures 3, 4 * <br> --- | 1, 5, 8 | B62B7/10 |
| A | EP-A-271422 (JANE S.A.) <br> * colonne 3, ligne 4 - colonne 4, ligne 32; figures 1-4 * <br> --- | 1, 5, 8-10 | |
| A | GB-A-2162801 (AMPAFRANCE) <br> * page 3, lignes 85 - 112; figures 4, 5 * <br> --- | 1, 5, 8 | |
| A | GB-A-2204282 (SPORT BABY LTD) <br> * abrégé; figures 1-4 * <br> ----- | 1, 5, 8 | |

DOMAINES TECHNIQUES RECHERCHES (Int. Cl.5 )

B62B

Le présent rapport a été établi pour toutes les revendications

| Lieu de la recherche | Date d'achèvement de la recherche | Examinateur |
|---|---|---|
| LA HAYE | 06 SEPTEMBRE 1990 | CZAJKOWSKI A.R. |